Europäisches Patentamt

European Patent Office

Office européen des brevets

(11) Publication number: **0 262 865 B1**

(19)

# EUROPEAN PATENT SPECIFICATION

(12)

(45) Date of publication of patent specification: **08.07.92**    (51) Int. Cl.⁵: **C02F 1/00**

(21) Application number: **87308442.0**

(22) Date of filing: **24.09.87**

(54) **Apparatus for the treatment of water to remove gas vacuolate cyanobacteria.**

(30) Priority: **30.09.86 GB 8623428**

(43) Date of publication of application:
**06.04.88 Bulletin 88/14**

(45) Publication of the grant of the patent:
**08.07.92 Bulletin 92/28**

(84) Designated Contracting States:
**AT BE CH DE ES FR GB GR IT LI LU NL SE**

(56) References cited:
**EP-A- 0 040 887**
**US-A- 3 606 999**

(73) Proprietor: **EAST ANGLIAN WATER COMPANY**
**163 High Street**
**Lowestoft NR32 1HT(GB)**

Proprietor: **Walsby, Anthony Edward**
**27 Old Sneed Park**
**Stoke Bishop Bristol BS9 1RG(GB)**

(72) Inventor: **Clarke, Keith Brian**
**Decoy House**
**Browston Great Yarmouth Norfolk(GB)**
Inventor: **Walsby, Anthony Edward**
**27 Old Sneed Park**
**Stoke Bishop Bristol BS9 1RG(GB)**

(74) Representative: **Ellis, Edward Lovell et al**
**MEWBURN ELLIS & CO. 2/3 Cursitor Street**
**London EC4A 1BO(GB)**

## Description

The present invention relates to an apparatus for the treatment of water to remove gas vacuolate cyanobacteria.

In some water treatment processes at present in operation, the water to be treated before being supplied to the customer is first allowed to stand in settlement tanks where the sediment and foreign bodies in the water taken from the reservoir or lake is allowed to settle to form a sludge at the bottom.

However, in certain areas and at certain times of the year gas-vacuolate cyanobacteria otherwise known as blue-green algae can form in a lake or reservoir. These cyanobacteria cannot be removed in settlement tanks because they float upwards and on the surface of the water.

It is well known that these cyanobacteria float because they contain gas vesicles that is they embody microscopic gas filled structures which ensure that they float rather than sink.

The gas vesicles of cyanobacteria are hollow, cylindrical structures with cone shaped ends. When a gas vesicle is subjected to a moderate pressure (up to 1 bar) it shows only a small volume change (shown to be about 1 part in 650 per bar for gas vesicles of cyanobacterium Anabaena flos-aquae in a report by A.E. Walsby in the Proceeding of the Royal Society of London, Volume 216, pages 355-368) but at a certain critical pressure the structure collapses flat. A.E. Walsby, in a paper in the Proceedings of the Royal Society of London, Volume 178, pages 301-326, showed that the average critical collapse pressure of gas vesicles in Anabaena flos-aquae varies from 4 bar to 8 bar with a mean value of about 6 bar. When the gas vesicle collapses the conical ends flatten to sectors of circles and pull away from the central cylinder, which flattens to a rectangular envelope. The contained gas diffuses out of the structure and dissolves in the surrounding water as the gas vesicle collapses.

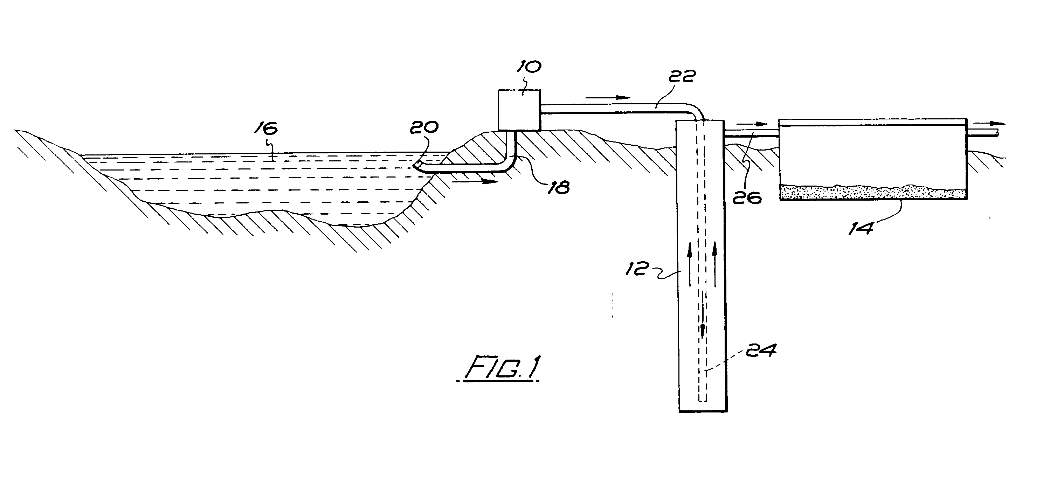

When the gas vesicle inside cells of cyanobacteria are collapsed the cyanobacteria lose their means of buoyancy and sink. This is illustrated in figure 1 of a paper by A.E. Walsby in Bacteriological Reviews, Volume 36 pages 1-32, an article which contains much other information on gas vesicles and their properties. It has been established from research carried out by P.K. Hayes and A.E. Walsby in a paper in the British Phycological Journal, Volume 21, pages 191-197 that the median critical pressure of gas vesicles from different species of cyanobacteria varied from about 5-9 bar and were inversely correlated with the mean diameters.

Various methods of treating cyanobacteria or dispersing them have not been found to be successful and the most practical method of removal would be to cause them to sink, by collapsing their gas vesicles, whereby they could be removed along with the rest of the sediment in the water.

There have been two previous attempts to do this. The first involved an attempt to collapse gas vesicles in cyanobacteria by subjecting them to ultra sound as described in the discussion section of a paper by A.J. Brook in Water Treatment and Examination, Volume 8 pages 133-137.

The second involved attempts to collapse gas vesicles by explosions detonated under water, described by A.E. Walsby in the New Scientist of 21 November 1968 pages 436-437, and by D- Menday in Water Research Volume 6, pages 279-284.

Neither of these methods have proved to be practicable in a method of removing cyanobacteria from water. We describe here a new method of collapsing gas vesicles of cyanobacteria with a hydrostatic head of water, and the subsequent removal of these pressure-treated organisms from water by sedimentation.

Although not directly relevant to the treatment of water to remove gas vacuolate cyanobacteria, a method for the disposal of solid wastes has been disclosed in British Patent Specification No. 1,163,494. The method for disposing of solid biologically activated waste materials disclosed in this Specification, includes the steps of:

(a) providing the waste materials in an aqueous slurry;

(b) pumping the slurry to a well;

(c) transporting the slurry in the well to a porous and permeable underground formation; and

(d) pressure injecting the slurry under positive well head pressure directly into the porous and permeable underground formation at a pressure which the formation readily accepts the slurry without fracturing it.

Such a method would be totally unsuitable for the treatment of water to remove gas vacuolate cyanobacteria, in view of the following:

(a) the earlier Specification teaches the disposal of waste solids and not purification of water; and

(b) the various steps proposed in the earlier Specification are costly and time consuming and could in no way be technologically adapted to the treatment of water.

Other methods not directly relevant to the treatment of water to remove gas vacuolate cyanobacteria have been disclosed in British Patent specifications 1,521,258; 1,527,731; 1,540,065; and 1,573,907. All of these relate to the treatment of waste water and sewage by injection of gas containing free oxygen under pressure. The method employed in each of these specifications is such that it would prevent the collapse of the gas vesicles in gas vacuolate cyanobacteria as described by A.E. Walsby in the paper in the Proceedings of the Royal Society Volume 178 pages 301-326 and further, as is made clear in the last of these specifications No. 1,573,907, the addition of oxygen under pressure would cause the material to float rather than to sediment out.

It is an object of the present invention to overcome the above problems by providing an apparatus for the removal of gas vacuolate cyanobacteria from water.

According to one aspect of the present invention there is provided apparatus for the treatment of water to remove gas vacuolate cyanobacteria which float on the surface of the water, said apparatus comprising:

pump means for extracting the water to be treated from a reservoir;

a steel lined bore-hole sunk into the ground;

a centrally located vertical pipe contained within said bore-hole, the lower end of which is open and located a short distance above the bottom of the bore-hole;

pipe means for connecting the top of said centrally located pipe to the outlet of said pump means, the depth of said bore-hole being sufficient to enable the natural hydrostatic head of water contained with said centrally located pipe to provide sufficient pressure to collapse the gas vesicles inside the cells of the cyanobacteria;

a settling tank located adjacent said bore-hole;

and pipe means connecting the top of the bore-hole with the settling tank to convey water which has passed down the centrally located pipe to the settling tank, whereby the collapsed gas vacuolate cyanobacteria settle at the bottom of the settling tank thus providing an output of water from the settling tank which is free of gas vacuolate cyanobacteria.

According to a second aspect of the present invention there is provided apparatus for the treatment of water to remove gas vacuolate cyanobacteria which float on the surface of the water, said apparatus comprising:

pump means for extracting the water to be treated from a reservoir;

a tower having inlet means at the top connected to the outlet of the pump means and outlet means at the bottom;

a steel lined bore-hole sunk in the ground;

a pipe extending vertically down the central zone of the said bore-hole;

pipe means connecting the outlet means of the tower to the top of the pipe extending down the bore-hole;

outlet means at the top of the bore-hole;

and a settling tank connected to receive water from the outlet means of the bore-hole; the combined height of the tower and depth of the bore-hole being sufficient to enable the natural hydrostatic head of water provided by said tower and bore-hole to provide sufficient pressure to collapse the gas vesicles inside the cells of the cyanobacteria, whereby the collapsed gas vacuolate cyanobacteria settle at the bottom of the settling tank thus providing an output of water from the settling tank which is free of gas vacuolate cyanobacteria.

Preferably the said predetermined pressure is approximately six bar, but may be as much as ten bar. A pressure exceeding 10 bar may be used but it is normally more than is needed to collapse the gas vesicles inside the cells of cyanobacteria that live in fresh water.

The present invention will now be described in greater detail by way of example with reference to the accompanying drawings, wherein;

Figure 1 is a diagrammatic representation of one preferred form of apparatus for the treatment of water to remove cyanobacteria;

Figure 2 is an elevation view of one preferred apparatus for hydrostatically subjecting the water to a predetermined pressure in order to collapse the gas vesicles in the cyanobacteria;

Figure 3 is a diagrammatic representation of a first alternative form of the apparatus shown in Figure 1; and

Figure 4 is a diagrammatic representation of a second alternative form of the apparatus shown in Figure 1.

Referring first to Figure 1, the apparatus for the treatment of water to remove cyanobacteria comprises: a pump 10, a steel-lined bore hole 12 and a settling tank 14. Water from a lake or reservoir 16 is pumped by the pump 10 through a pipe 18 having an appropriate filter in its nozzle inlet section 20. The pumped water is passed to the bore-hole 12 via a pipe 22. As mentioned above the bore-hole 12 is lined with a steel lining to contain the water under pressure. A pipe 24 extends centrally down the bore-hole 12 to within a short distance from the bottom. Any other suitable lining material may be used instead of steel.

The preferred depth of the bore-hole 12 is about 60m. However, the actual depth for any particular set of conditions is quite critical and has to be determined by experiment. Sufficient pressure must be generated, by the hydrostatic head at the bottom of pipe 24, to collapse enough gas vesicles to cause loss of the cyanobacteria's buoyancy. The minimum pressure required depends on the species of cyanobacterium present and may be from 3 bar to 10 bar. Since a pressure of 1 bar is generated by a vertical water column of 10.2m the required depth of pipe 24 below the surface is, correspondingly, about 31m to 102m. According to the nature of the cyanobacteria and the location, the preferred depth may therefore lie in the range of from 31m to 102m.

The water from the reservoir 16 is thus pumped by the pump 10 down to the bottom of the pipe 24, where for a depth of 60m the hydrostatic pressure of the water at the bottom of the bore-hole 12 is approximately 6 bar. The water which flows out of the top of the bore-hole 12 is passed to the settling tank 14 by means of a pipe 26.

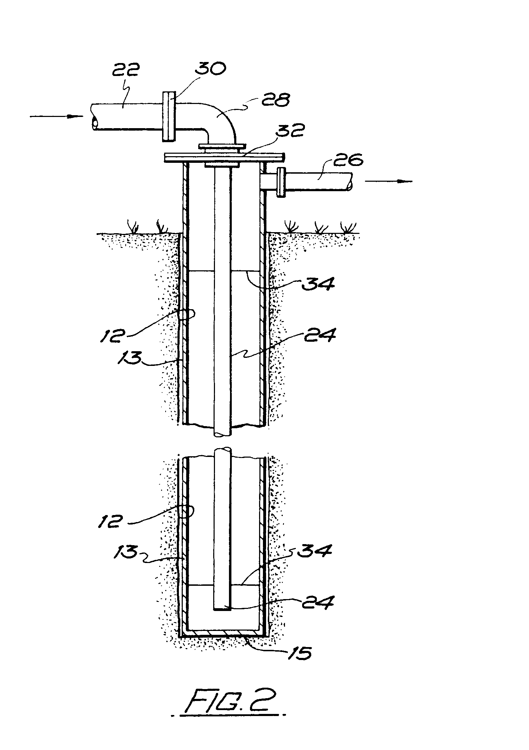

The construction of the bore-hole 12 is shown in greater detail in Figure 2. After the bore-hole 12 has been dug in the ground it is sealed against penetration of liquid from the ground by being steel lined with a series of plates 13 or annular rings which are welded together. A circular steel plate 15 is provided at the bottom of the bore-hole 12. As shown, the pipe 22 from the pump 10 is connected to the centrally located vertical pipe 24 by means of an elbow joint 28 and flanges 30 and 32. The pipe 24 is centrally located within the steel-lined bore-hole by means of locating spiders 34 which are provided at equi-spaced intervals from top to bottom of the bore-hole 12.

In operation, water from the lake or reservoir 16 containing cyanobacteria is pumped to the bottom of the bore-hole 12 by means of the pipe 24, where the hydrostatic pessure builds up to about 6 bar. This pressure is sufficient to collapse the gas vesicles in the cyanobacteria, so that when they are carried out of the bore-hole 12 and into the settling tank 14 via the pipe 26, their specific gravity is now greater than unity so that they sink with the other sludge and foreign bodies to the bottom of the settling tank leaving clean treated water at the top of the settling tank from which it can be drawn for further treatment before being supplied to the customer.

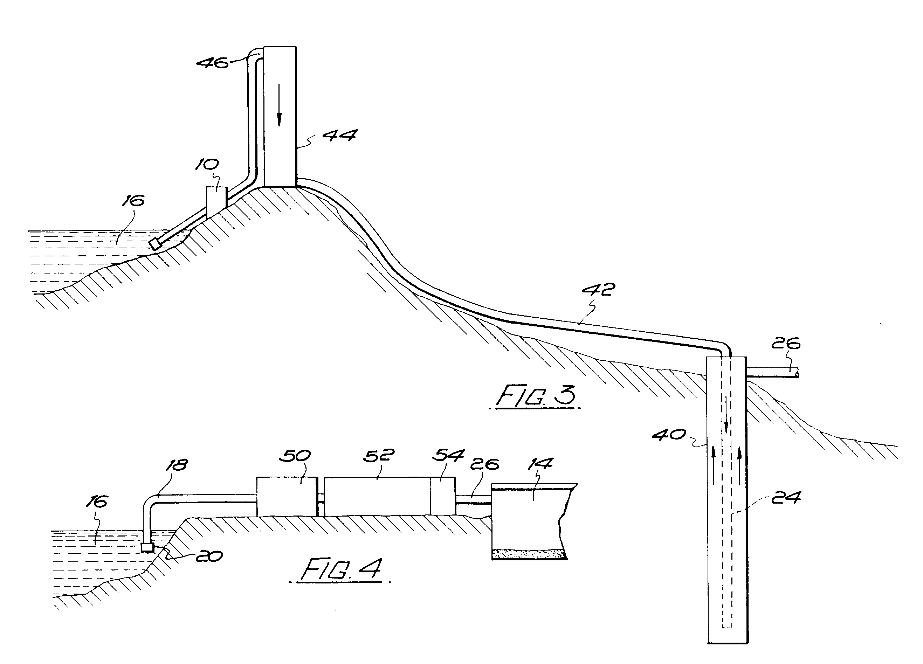

A first alternative construction is shown in Figure 3, wherein the height of the level of the lake or reservoir is above the location of the treatment apparatus and part of the hydrostatic head can be supplied by the difference in vertical level between the reservoir surface and the top of the bore-hole or between the top of a tower 44 and the top of a bore-hole 40. The required depth of the bore-hole 40 is reduced accordingly. As shown in Figure 3, water from a reservoir 16 is pumped up to the top of a tower 44 by means of the pump 10 through a pipe 46. The bottom of the tower 44 is connected to the pipe 24 of the bore-hole 40 by a pipe 42.

Water is pumped into the top of the tower through the pipe 46 at a rate so as to maintain the level of water near the top of the tower 44. In this case the desired pressure of 6 bar can be produced by ensuring that the total head between the top of the tower 44 and the bottom of the pipe 24 is 60m.

A second alternative construction is shown in Figure 4 in which the pressure necessary to collapse the gas vesicles inside the cells of the cyanobacteria can be generated in a water container or pipe. As shown a pump 50 takes water from the reservoir 16 via the pipe 18 and supplies it to a horizontal cylindrical container or pipe 52 which is provided with a diffuser or pressure relief valve 54 at the other end. Water passing through the valve 54 is collected in the settling tank 14. The pressure which builds up in the container or pipe 52 is sufficient to collapse the gas vesicles inside the cells of the cyanobacteria which then sink to the bottom of the settling tank 14. Lastly a combination of the constructions shown in Figure 3 and 4 is possible.

Whilst the above constructions have been described in connection with water treatment processes for public water supply customers, it will be appreciated that the same method and apparatus could be used to decrease the amount of cyanobacteria that contain gas vesicles in natural lakes or other water impoundments, and thereby to improve the water quality. In this case the pressure-treated water is returned to the lake either directly from the bore-hole, in which case the cyanobacteria will settle out on the lake bottom, or after removing the cyanobacteria by sedimentation in a settling tank. The preferred method would be to withdraw water from a particular depth at one end of the lake and to return it after treatment to the lake at another depth at a point remote from the withdrawal site, so as to minimize mixing of the treated and untreated water. Regard would be paid to the patterns of water circulation in the lake so that withdrawal occurred at a site, such as at lee shores, where the cyanobacteria tended to accumulate.

## Claims

1. Apparatus for the treatment of water to remove gas vacuolate cyanobacteria which float on the surface of the water, said apparatus comprising:

   pump means (10) for extracting the water to be treated from a reservoir (16);

   a steel lined bore-hole (12) sunk into the ground;

   a centrally located vertical pipe (24) contained within said bore-hole, the lower end of which is open and located a short distance above the bottom of the bore-hole;

   pipe means (22) for connecting the top of said centrally located pipe to the outlet of said pump means, the depth of said bore-hole being sufficient to enable the natural hydrostatic head of water contained with said centrally located pipe to provide sufficient pressure to collapse the gas vesicles inside the cells of the cyanobacteria;

a settling tank (14) located adjacent said bore-hole;

and pipe means (26) connecting the top of the bore-hole with the settling tank to convey water which has passed down the centrally located pipe to the settling tank, whereby the collapsed gas vacuolate cyanobacteria settle at the bottom of the settling tank thus providing an output of water from the settling tank which is free of gas vacuolate cyanobacteria.

2. Apparatus according to claim 1, wherein the depth of the bore-hole (12) lies in the range of 31m to 102m.

3. Apparatus according to claim 1, wherein said pressure at the bottom of the bore-hole (12) provided by the hydrostatic head of water is in the range of 3 to 10 bar.

4. Apparatus according to claim 1, wherein said pressure at the bottom of the bore-hole (12) provided by the hydrostatic head of water is approximately 6 bar.

5. Apparatus as in claim 1, wherein substantially the total pressure applied to collapse the gas vacuolate cyanobacteria comes from the bore-hole and the natural hydrostatic head of water contained with said centrally located pipe.

6. Apparatus for the treatment of water to remove gas vacuolate cyanobacteria which float on the surface of the water, said apparatus comprising:

pump means (10) for extracting the water to be treated from a reservoir;

a tower (44) having inlet means (46) at the top connected to the outlet of the pump means and outlet means at the bottom;

a steel lined bore-hole (40) sunk in the ground;

a pipe (24) extending vertically down the central zone of the said bore-hole;

pipe means (42) connecting the outlet means of the tower (44) to the top of the pipe (24) extending down the bore-hole (40);

outlet means (26) at the top of the bore-hole;

and a settling tank (14) connected to receive water from the outlet means of the bore-hole; the combined height of the tower and depth of the bore-hole being sufficient to enable the natural hydrostatic head of water provided by said tower and bore-hole to provide sufficient pressure to collapse the gas vesicles inside the cells of the cyanobacteria, whereby the collapsed gas vacuolate cyanobacteria settle at the bottom of the settling tank thus providing an output of water from the settling tank which is free of gas vacuolate cyanobacteria.

7. Apparatus according to claim 6, wherein said hydrostatic head provided by the combined height of the tower (44) and depth of the bore-hole (12) is 60m to provide a pressure of 6 bar.

8. Apparatus as in claim 6, wherein substantially the total pressure applied to collapse the gas vacuolate cyanobacteria comes from the bore-hole and the natural hydrostatic head of water contained with said centrally located pipe (24) said tower (44) and interconnecting pipe means (42).

9. Apparatus according to claim 6, characterized in that it additionally includes in combination with the tower (44) and bore-hole (40), a pump (50), a water container (52) whose one end is connected to the pump, and a diffuser or pressure relief valve (54) connected to the other end of the container through which the water to be treated passes under hydrostatic pressure.

**Revendications**

1. Dispositif pour le traitement de l'eau pour l'élimination des cyanobactéries contenant des vésicules de gaz qui flottent à la surface de l'eau, ledit dispositif comprenant :

un moyen formant pompe (10) pour extraire l'eau à traiter d'un réservoir (16) ;

un trou de sondage (12) enduit d'acier, enfoncé dans le sol ;

un tube vertical placé centralement (24) contenu dans ledit trou de sondage, dont l'extrémité inférieure est ouverte et est placée à une courte distance au-dessus du fond du trou de sondage ;

un moyen formant tube (22) pour connecter le sommet dudit tube placé centralement à la sortie dudit moyen formant pompe, la profondeur dudit trou de sondage étant suffisante pour permettre à la pression hydrostatique naturelle de l'eau contenue dans ledit tube placé centralement de produire suffisamment de pression pour l'affaissement des vésicules de gaz à l'intérieur des cellules des cyanobactéries ;

un réservoir de décantation (14) placé adjacent audit trou de sondage ; et

un moyen formant tube (26) reliant le sommet du trou de sondage au réservoir de décantation pour transporter l'eau qui est descendue le long du tube placé centralement jusqu'au réservoir de décantation, pour qu'ainsi les cyanobactéries contenant des vésicules de gaz à l'état affaissé se déposent au fond du réservoir de décantation pour produire une sortie d'eau du réservoir de décantation qui est exempte de cyanobactéries contenant des vésicules de gaz.

2. Dispositif selon la revendication 1, où la profondeur du trou de sondage (12) est comprise entre 31 m et 102 m.

3. Dispositif selon la revendication 1, où ladite pression au fond du trou de sondage (12) produite par la pression hydrostatique de l'eau est comprise entre 3 et 10 bars.

4. Dispositif selon la revendication 1, où ladite pression au fond du trou de sondage (12) produite par la pression hydrostatique de l'eau est d'environ 6 bars.

5. Dispositif selon la revendication 1, où sensiblement la totalité de la pression appliquée pour l'affaissement des cyanobactéries contenant des vésicules de gaz provient du trou de sondage et de la pression hydrostatique naturelle de l'eau contenue dans ledit tube placé centralement.

6. Dispositif pour le traitement de l'eau pour l'élimination des cyanobactéries contenant des vésicules de gaz qui flottent à la surface de l'eau, ledit dispositif comprenant :
un moyen formant pompe (10) pour extraire l'eau à traiter d'un réservoir ;
une tour (44) ayant un moyen formant entrée (46) au sommet, qui est connecté à la sortie du moyen formant pompe et un moyen formant sortie en son fond ;
un trou de sondage (40) enduit d'acier enfoncé dans le sol ;
un tube (24) s'étendant verticalement le long de la zone centrale dudit trou de sondage ;
un moyen formant tube (42) reliant le moyen formant sortie de la tour (44) au sommet du tube (24) s'étendant le long du trou de sondage (40) ;
un moyen formant sortie (26) au sommet du trou de sondage ;
et un réservoir de décantation (14) relié pour recevoir l'eau du moyen de sortie du trou de sondage ; la hauteur combinée de la tour et la profondeur du trou de sondage étant suffisantes pour permettre à la pression hydrostatique naturelle de l'eau produite par ladite tour et le trou de sondage de produire une pression suffisante pour provoquer l'affaissement des vésicules de gaz à l'intérieur des cellules des cyanobactéries, pour qu'ainsi les cyanobactéries,dont les vésicules de gaz se sont affaissées, se déposent au fond du réservoir de décantation pour ainsi produire une sortie d'eau du réservoir de décantation qui est exempte de cyanobactéries contenant des vésicules de gaz.

7. Dispositif selon la revendication 6, où ladite pression hydrostatique produite par la hauteur de la tour (44) et la profondeur du trou de sondage (12) combinées est de 60 m pour produire une pression de 6 bars.

8. Dispositif selon la revendication 6, où sensiblement la totalité de la pression appliquée pour l'affaissement des cyanobactéries contenant des vésicules de gaz, provient du trou de sondage et de la pression hydrostatique naturelle de l'eau contenue dans ledit tube placé centralement (24), ladite tour (44) et le moyen formant tube d'interconnexion (42).

9. Dispositif selon la revendication 6, caractérisé en ce qu'il comporte additionnellement, en combinaison avec la tour (44) et le trou de sondage (40), une pompe (50), un conteneur d'eau (2) dont une extrémité est connectée à la pompe et un diffuseur ou détendeur (54) connecté à l'autre extrémité du conteneur,par où l'eau à traiter passe à la pression hydrostatique.

**Patentansprüche**

1. Vorrichtung zur Behandlung von Wasser zum Entfernen von Gasvakuolen aufweisenden Zyanobakterien, die auf der Wasseroberfläche schwimmen, wobei die genannte Vorrichtung umfaßt:
eine Pumpeinrichtung (10) zum Abziehen des zu behandelnden Wassers von einem Reservoir (16);
ein in den Boden versenktes, mit Stahl ausgekleidetes Bohrloch (12);
ein in der Mitte angeordnetes vertikales Rohr (24), das im genannten Bohrloch enthalten ist und dessen unteres Ende offen und in einem kurzen Abstand über dem Boden des Bohrlochs angeordnet ist;
eine Rohreinrichtung (22) zum Verbinden des Oberteils des genannten in der Mitte angeordnetes Rohres mit dem Auslaß der genannten Pumpeinrichtung, wobei die Tiefe des genannten Bohrlochs ausreicht, um es zu ermöglichen, daß die im genannten in der Mitte angeordneten Rohr enthaltene natürliche hydrostatische Wassersäule genügend Druck erzeugt, um die Gasbläschen innerhalb der Zellen der Zyanobakterien zu zerdrücken; einen in Nachbarschaft des genannten Bohrlochs angeordneten Absetztank (14); und eine Rohreinrichtung (26), die das obere Ende des Bohrlochs mit dem Absetztank verbindet, um Wasser, welches das in der Mitte angeordnete Rohr in Abwärtsrichtung passiert hat, zum Absetztank zu befördern, wodurch sich die zerdrückte Gasvakuolen aufweisenden Zyanobakterien am Boden des Absetztanks absetzen und somit eine Wasserabströmung des Absetztanks geschaffen wird, die frei von Gasvakuolen aufweisenden Zyanobakterien ist.

2. Vorrichtung nach Anspruch 1, worin die Tiefe des Bohrlochs (12) im Bereich von 31 m bis 102 m liegt.

3. Vorrichtung nach Anspruch 1, worin der von der hydrostatischen Wassersäule erzeugte genannte Druck am Boden des Bohrlochs (12) im Bereich von 3 bis 10 bar liegt.

4. Vorrichtung nach Anspruch 1, worin der genannte von der hydrostatischen Wassersäule erzeugte Druck am Boden des Bohrlochs (12) etwa 6 bar beträgt.

5. Vorrichtung nach Anspruch 1, worin im wesentlichen der gesamte Druck, der angewandt wird, um die Gasvakuolen aufweisenden Zyanobakterien zu zerdrücken, vom Bohrloch und der im genannten in der Mitte angeordneten Rohr enthaltenen hydrostatischen Wassersäule kommt.

6. Vorrichtung zur Behandlung von Wasser zum Entfernen von Gasvakuolen aufweisenden Zyanobakterien, die auf der Wasseroberfläche schwimmen, wobei die genannte Vorrichtung umfaßt:
eine Pumpeinrichtung (10) zum Abziehen des zu behandelnden Wassers von einem Reservoir;
einen Turm (44) mit einer Einlaßeinrichtung (46) am Oberteil, die mit dem Auslaß der Pumpeinrichtung verbunden ist, und einer Auslaßeinrichtung am Boden;
ein in den Boden versenktes, mit Stahl ausgekleidetes Bohrloch (40);
ein Rohr (24), das sich im mittleren Bereich des genannten Bohrlochs vertikal nach unten erstreckt;
eine Rohreinrichtung (42), welche die Auslaßeinrichtung des Turms (44) mit dem Oberteil des sich das Bohrloch (40) hinunter erstreckenden Rohres (24) verbindet;
eine Auslaßeinrichtung (26) am Oberteil des Bohrlochs;
und einen Absetztank (14), der verbunden ist, um Wasser von der Auslaßeinrichtung des Bohrlochs aufzunehmen; wobei die kombinierte Höhe des Turmes und Tiefe des Bohrlochs ausreichen, um es zu ermöglichen, daß die vom genannten Turm und Bohrloch geschaffene natürliche hydrostatische Wassersäule genügend Druck erzeugt, um die Gasbläschen innerhalb der Zyanobakterienzellen zusammenzudrücken, wodurch sich die zusammengedrückte Gasvakuolen aufweisenden Zyanobakterien am Boden des Absetztanks absetzen, wodurch eine Wasserabströmung vom Absetztank geschaffen wird, die frei von Gasvakuolen aufweisenden Zyanobakterien ist.

7. Vorrichtung nach Anspruch 6, worin die von der kombinierten Höhe des Turms (44) und Tiefe des Bohrlochs (12) geschaffene Wassersäule 60 m hoch ist, um einen Druck von 6 bar zu erzeugen.

8. Vorrichtung nach Anspruch 6, worin im wesentlichen der gesamte Druck, der angewandt wird, um die Gasvakuolen aufweisenden Zyanobakterien zusammenzudrücken, vom Bohrloch und der natürlichen hydrostatischen Wassersäule stammt, die in dem genannten in der Mitte angeordneten Rohr (24), dem genannten Turm (44) und der verbindenden Rohreinrichtung (42) enthalten ist.

9. Vorrichtung nach Anspruch 6, dadurch gekennzeichnet, daß sie zusätzlich in Kombination mit dem Turm (44) und dem Bohrloch (40) eine Pumpe (50), einen Wasserbehälter (52), dessen eines Ende mit der Pumpe verbunden ist, und ein Diffusor- oder Überdruckventil (54), einschließt, das mit dem anderen Ende des Behälters verbunden ist, durch den das zu behandelnde Wasser unter hydrostatischem Druck hindurchgeht.

_FIG.1_

FIG. 2

FIG.3

FIG.4